# EUROPEAN PATENT APPLICATION

(11) **EP 4 361 906 A1**
(43) Date of publication of application: **01.05.2024**
(21) Application number: 22203999.2
(22) Date of filing: 27.10.2022
(51) Int. Cl.: G06Q 10/00, G06Q 50/00, G06Q 50/16

(54) **METHOD FOR MANAGING THE UTILISATION CAPACITY OF A MULTI-PURPOSE PROPERTY**

(71) Applicant: VALO Group Oy, 00280 Helsinki (FI)
(72) Inventor: SAARI, Teemu, 91910 Tupos (FI); SÄKKINEN, Markus, 91500 Muhos (FI); LAUNO, Erno, 02230 Espoo (FI); HURME, Minna, 02400 Kirkkonummi (FI); SAARI, Tommi, 91910 Tupos (FI)
(74) Representative: Genip Oy

(57) **Abstract**

The present invention relates to a method for managing the utilisation capacity of a multi-purpose property, the multi-purpose property comprising numerous bookable premises, the purpose of use of which can be changed according to need between use as accommodation premises, office work premises or meeting rooms. For managing the utilisation capacity, a system is provided by means of which is determined the booking and the booking parameters for each of the premises related to it for each moment of time, the booking parameters including the client, the client type, the booking type according to the allocated use, the starting and ending time of the booking, as well as recorded the actual time of departure, whereupon in the method is calculated a forecast of the secondary period of use which remains between the actual departure times and starting times of the bookings of different clients, which is released for booking for other than primary use. The invention also relates to furnishings suitable for the purpose.

## Description

### Field of the invention

The invention relates to a method according to the preamble of claim 1. The invention relates especially to a method for managing the utilisation capacity of a multi-purpose property, the multi-purpose property comprising numerous bookable premises, the purpose of use of which can be changed according to need between use as accommodation premises, office work premises or meeting rooms, whereupon each of the above-said uses comprises the convertible furnishings and/or layout of the premises, whereupon the feature determining the primary use of a piece of furniture can be folded out of the user's reach inside walls and/or other structures and/or by means of the mechanisms of the piece of furniture or layout. The invention also relates to a convertible piece of furniture, whereupon the feature determining the primary use of the piece of furniture can be folded out of the user's reach inside walls and/or other structures by means of the mechanism of the piece of furniture.

### Technical background

The use of business premises has been going through a major transition for several years, and with the pandemic in recent years, the situation has further changed. The use of premises is inefficient, and expenses are unnecessarily high in relation to the actual use of the premises. Contracts regarding the use of premises are typically based on occupancy, so that the charge is not based on use, but on the occupancy of the premises, irrespective of the how much the premises are used. According to studies on the subject, the actual utilisation rate of the rooms in office properties is approximately 5-10%. Such utilisation rate also has environmental impacts because, irrespective of how much the premises are used, heating or cooling and ventilation must be maintained in the property 24/7.

One solution is to provide multi-purpose premises which serve different purposes. As an example can be taken dual-use hotels, where the premises, in this case the rooms, are hotel rooms at night and offices during the day, which are booked one room at a time for this purpose. The capacity requirement and the demand for the premises is typically different during the day and at night.

Conventionally, premises and offices can be rented with different types of contracts in serviced offices. Any additional premises have to be agreed upon or provided separately. The capacity is managed per office based on the occupancy of the premises, not on use.

Likewise, accommodation capacity can be purchased from hotels with different types of contracts. Any additional premises have to be agreed upon or provided separately. The capacity can typically be managed only per room.

In business use, rapidly changing requirements may occur regarding the size of an office, the number of offices, or their use. There is, therefore, a need to create more capacity cost-effectively. Likewise, there is a need to utilise the capacity available efficiently and as much as possible as self-service by the users themselves.

The above-mentioned needs for more efficient capacity utilisation require technical solutions allowing for efficient and rapid provision of multi-purpose use, and a method by means of which the capacity management can be controlled such that capacity is available in the form required and at the desired time. One required feature is a technical solution which makes possible different purposes of use. This means premises with convertible furnishings and/or layout, whereupon the feature determining the primary use of the piece of furniture can be folded out of the user's reach inside walls and/or other structures by means of the mechanisms of the piece of furniture and/or layout. This refers, for example, to the type of solution where, by visual observation, the other use of the piece of furniture is not obvious. For example, if the other feature or form is a bed, it is not desirable for bed linen to be visible in the office premises. The bed can be folded on the wall, and the bottom of the bed forms a neat, uniform wall surface or door-like structure, but the actual bed linen or the like is not visible. From the prior art is known, among others, US 3088127, which discloses some dual-purpose furniture constructions.

### Description of the invention

The object of the invention is to provide a solution - a method by means of which the utilisation rate of the premises of a property can be improved. A further object is to flexibly change the capacity of the premises of a property equipped for multi-purpose use to different office or accommodation purposes easily and in real time according to demand. Yet another object is to enable the user group of the office to operate in the premises as if they were in their own property. Such successful multi-purpose use and efficient use of premises requires a system which can be controlled through a user interface which makes versatile use of the premises possible.

The objects of the invention are achieved as disclosed in greater detail mainly in the independent claims as well as in the other claims. According to one embodiment of the invention has been achieved a method for managing the utilisation capacity of a multi-purpose property, the multi-purpose property comprising numerous bookable premises, the purpose of use of which can be changed according to need between use as accommodation premises, office work premises or meeting rooms, whereupon each of the said uses comprises the convertible furnishings and/or layout of the premises, whereupon the feature determining the primary use of a piece of furniture can be folded out of the user's reach inside walls and/or other structures by means of the mechanisms of the piece of furniture and/or layout, whereupon for managing the utilisation capacity is provided a system by means of which is determined the booking and the booking parameters for each of the premises related to it for each moment of time, the booking parameters including the client, the client type, the booking type according to the allocated use, the starting time and ending time of the booking, as well as recorded the actual time of departure, whereupon in the method is calculated a secondary use forecast remaining between the actual departure times and starting times of different clients, which is released for booking for other than primary use.

By means of the above-mentioned method is, therefore, made a forecast of capacity being released which takes into account through calculation the actual use of the premises by the client, a change in usage habits, and creates a model from it, according to which the same physical premises can be sold to another client for different use. In practice, one advantageous embodiment is a hotel offering accommodation from which guests staying overnight leave in the morning and to which the next guests staying overnight arrive in the evening. Between these often remains a period equalling a whole office work-day which, if effectively implemented, could be sold for other use, for office work, for a meeting room or for other similar purpose. Of course, some of the overnight guests stay longer in the morning and others leave earlier, but by cat-egorising by client type, a statistical estimate of departure times can be calculated for each client type and thereby the capacity available for sale can be more accurately estimated. Any discrepancies between the forecast and the realisation can be addressed by a calculated margin of error, thus avoiding double-booking of the same premises.

Other additional features characteristic of the invention will become apparent from the accompanying claims and the following description of the embodiments shown in the Figures.

According to one embodiment of the invention, on the basis of the realised actual departure times, the system calculates for each client a statistical estimated departure time according to client type, whereupon the overall capacity for secondary use is determined on the basis of statistical probability. This makes it possible to sell the capacity as accurately as possible as the data contained in the system can be used efficiently for forecasting clients' actions and thus for utilising the capacity available as well as possible. This feature further reduces the possibility of double-booking.

According to another embodiment of the invention, the system calculates the forecast of available free capacity until the beginning of each booking, until the booking is confirmed to be in use. Thus, the accuracy of the system improves the closer the beginning of the new secondary booking is. Thus, when the secondary client arrives for checking-in, the system can direct them to already prepared premises so that cleaning up the premises between clients and changing the configuration of the premises do not cause waiting times. Changing the configuration of the premises refers to the purpose of use being changed according to need between use as accommodation premises, office work premises or meeting rooms, whereupon each of the above-mentioned uses comprises the convertible furnishings and/or layout of the premises, whereupon the feature determining the primary use of a piece of furniture can be folded out of the user's reach inside the walls and/or other structures by means of the mechanisms of the piece of furniture and/or layout.

According to one embodiment of the invention, the system comprises an access control function, by means of which the locking of each of the premises is determined, and a physical access control tag, such as a key card, a mobile device NFC tag or the like, by means of the programming of which the bookings and the secondary use period between bookings are separated from one another. From this follows that the configuration of the premises or other corresponding technical implementation can easily be set to correspond to each booking.

According to one embodiment, the method is controlled by a user interface adaptable to a mobile device, whereupon the client can independently make a booking concerning the premises or their uses or change a booking. Furthermore, a client in this multi-purpose property according to a more extensive embodiment may be an organisational user managing the bookings of several premises and their allocation to several users in the said organisation. The system may also include a feature by means of which future bookings of the premises are forecast on the basis of the organisational user's earlier or preliminary indicated need. In this way, the method can be used efficiently even for the needs of a larger organisation since a larger entity of premises in a multi-purpose property can be managed. Similarly, the organisational user may release capacity, or the system may suggest that capacity is released, if the organisation's internal utilisation rate of the premises appears to remain low.

According to one embodiment, the system comprises an incentive relating to the management of the bookings, which motivates the user to choose a course of action that allows selling the secondary use period, or to choose a starting time for the booking or an ending time for the booking based on the capacity calculated by the system and deviating from the user's primary wish. In this way, the operator managing the bookings of the property can be assisted in that as large a proportion of the premises as possible can be sold for secondary use. Clients would want to act in a way that is desirable from the point of view of the owner or operator of the property. Similarly, an incentive can also be linked to recommending the service, whereupon the client can, if they wish, act as seller of the service and benefit from it.

According to yet another embodiment, when the system detects a change in demand in the bookings for the premises, the system can change the incentive in order to make possible a booking for premises corresponding to demand. This may be based on, for example, the incentive guiding the client to choose a later starting time for the booking or an earlier ending time for the booking.

According to yet another embodiment, the system comprises a feature which directs the physical change in the purpose of use of the premises and the cleaning to be carried out in the time window associated with the change of client. This can be implemented, for example, by the team providing the cleaning service having a mobile device for operational control, whereupon they will be able to see the booking status in real time and be able to prioritise their work in accordance with the booking status, or the system may instruct the cleaning to take place in a particular order which may, for example, minimize walking back and forth in the property's corridors, or similar measures to enhance the efficiency of the maintenance service.

According to one embodiment, a computer program is provided, which, when running on a computer, is configured to implement one of the methods according to the previous embodiments. According to a further embodiment, a user interface is provided to control the method described above. This is preferably a user interface adaptable to a mobile device.

According to one embodiment is provided a convertible piece of furniture, whereupon the feature determining the primary use of the piece of furniture can be folded out of the user's reach inside the walls and/or other structures by means of the mechanism of the piece of furniture. The piece of furniture comprises an electrically controlled locking mechanism with at least one sensor and/or switch for identifying the primary position of use and the secondary position of use, as well as a locking device or locking devices for opening/locking the said positions of use, whereupon the piece of furniture is programmatically controllable by means of the method according to the embodiments described above. Depending on the object, the sensor and/or switch may be, for example, optical, capacitive or resistive; there are numerous alternatives for implementing this type of identification of the position of use. The piece of furniture may be, for example, a bed, table, chair, sofa, room divider or a combination of any of the foregoing.

The advantages of the invention are especially its efficiency and simplicity in managing the capacity of a multi-purpose property and improving its utilisation rate. By means of the method, almost the full capacity can be sold without clients finding that they have to wait for premises to become available or experiencing inconvenience when the premises they have booked are being converted for another use as soon as they have left. Furthermore, the method described above and its different embodiments utilise the capacity available efficiently and as far as possible as self-service performed by the user themselves, whereupon, for example, a traditional function such as a hotel reception is not necessarily needed. The end-users, that is, the clients, get the right type of premises at the time desired and sufficiently automatically. In this way, selling and operating with the "waste capacity" associated with the conventional method does not entail such high costs that the benefits from the sale of the additional capacity would be offset by the increased work it causes. Thus, end clients themselves do not have to take any measures or convert the premises regarding multi-purpose use, and the system will provide rights of access to the right type of premises at the right time without the personal service provided by traditional hotel receptions.

### List of drawings

The invention and its operation are described in the following with reference to the accompanying schematic drawings, wherein:
- Figure 1: shows schematically an example of the capacity of a multi-purpose property over one 24-hour review period,
- Figure 2: shows schematically an example of the free capacity of a multipurpose property over a two-week review period,
- Figure 3: shows the operating logic of an embodiment of the method as a flow chart,
- Figures 3a, 3b, 4a, 4b, 5a, 5b, 6a, 6b, 7a, 7b: show schematically some embodiments of the premises of a multipurpose property which are convertible according to use.

### Description of the drawings

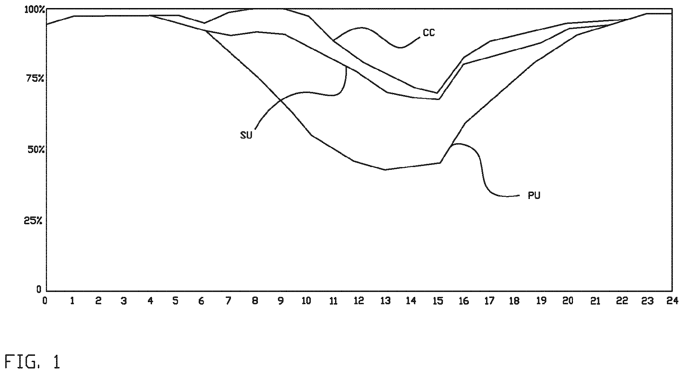

Figure 1 shows schematically an example of the total capacity forecast of all of the bookable multi-purpose premises in a multi-purpose property over a 24-hour review period. This example describes a hotel where the primary use PU is overnight stay, and the secondary use SU is office/teamwork premises. In Figure 1, the horizontal axis shows a period of 24 h, starting from 0 (which means the time 00:00) and progressing to 24 (which means the time 24:00), the vertical axis shows the capacity in use divided into different purposes, totalling at most 100%, which means that the whole capacity is in use. In this example, the main part of the capacity is used for the primary use PU, which is shown by the lowest curve in the Figure between 0%- PU. From Figure 1 can be seen that during the period from 01 a.m. to 07 a.m., almost the entire capacity is booked for the primary use, that is, as hotel premises for overnight stay. After 07 a.m., the overnight guests gradually begin to leave, and the capacity booked for that purpose is at its lowest at 1 p.m., after which the number of overnight guests again begins to increase, especially from 3 p.m. onwards. The proportion of secondary users, the area between curves PU and SU, begins to correspondingly increase from 7 a.m. onwards when the premises cleaned after the primary users are again available. In Figure 1, the capacity of premises being cleaned is described by the third area, where the capacity reserved for cleaning is the section between curves SU and CC. The remainder, that is, the capacity above curve CC is unused capacity. In a traditional hotel, the capacity in productive use is 0% - PU. The method according to the invention now makes possible the additional sale of the capacity between curves PU and SU.

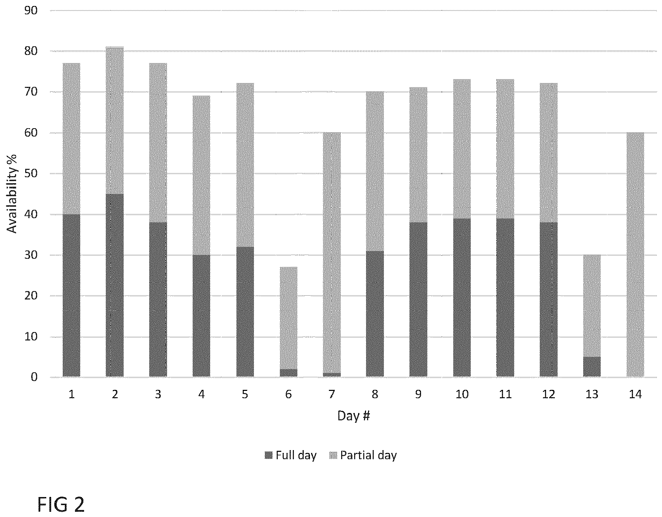

Figure 2 shows a 14-day review period of the utilisation rate of a hotel reviewed so as to show how much more room capacity could have been sold during the review period. In Figure 2, a division has been made into two categories: the Full day capacity available for sale, which corresponds to the primary use PU shown in Figure 1, and the Partial day capacity, which corresponds to the secondary use SU shown in Figure 1. In Figure 2, day 1 refers to Monday, whereupon days 6 and 7, as well as days 13 and 14 refer to the weekend days Saturday and Sunday. In Figure 2 can be seen that on weekdays 1-5 and 8-12 both full day and partial day capacity would have been available for sale. On weekend days, there would have been only very little, if any, full day capacity available for sale, but a fair amount of partial day capacity would have been available. This type of review helps to understand the variation in capacity in the example hotel in question on week level, and where possible additional sales would be available with regard to the method in question. The method is, however, partly based on a statistical review of historical data and a simulation of the realisation, in order to be able to calculate in the method a forecast of the secondary period of use remaining between the actual departure times and starting times of the bookings of different guests, which is released for booking for other than primary use.

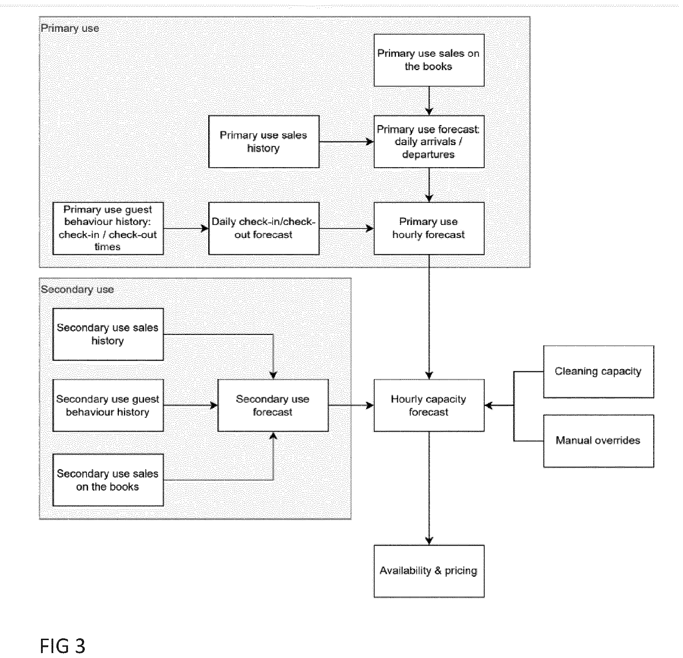

Figure 3 shows as a flow chart the operating logic of the method and the functional blocks belonging to it on the basis of which the method is controlled. The main blocks are "Primary use", which corresponds to the primary purpose of use, such as a hotel for overnight stay, and "Secondary use", which corresponds to a secondary purpose of use such as office premises, meeting rooms or teamwork rooms. The purpose of the main blocks is to provide an accurate forecast of the capacity available for sale for either use.

In Figure 3, the main block, "Primary use", collects information on the capacity sold for the said purpose in the block "primary use sales on the books". From the "Primary use sales history" block is obtained historical data on how sales have previously taken place. The information from these two mentioned above is combined, which gives a forecast of daily departure/arrival times in the block "Primary use forecast: daily arrivals/departures". As the second data line is used the guests' behaviour history in the "Primary use guest behaviour history: check-in/check-out times" block. It has been note, among other things, that business travellers typically leave a hotel much earlier than leisure travellers. This typical behavioural feature is taken into account in this block. On the basis of the preceding information is composed the following block, "Daily check-in/check-out forecast", which provides a daily forecast of the guests' check-ins and check-outs. The foregoing information is composed and processed in the "Primary use hourly forecast" block which gives an hourly forecast of the capacity (capacity available and/or the capacity in use and changes in it) according to primary use.

In Figure 3, the main block "Secondary use" is divided in a corresponding manner into different blocks for processing different information. Historical data on earlier occurrences of secondary use and their sales are stored and processed in the "Secondary use sales history" block. The "Secondary use guest behaviour history" block contains historical data of the existing clientele, on the basis of which can be forecast the behaviour of each individual client with respect to the use of the premises, and on the basis of this can be made a statistical analysis of the occurrences. Furthermore, the sales information on already made bookings is recorded and processed in the "Secondary use sales on the books" block. The data in these three blocks mentioned above is combined in the "Secondary use forecast" block which produces a forecast of the secondary use of the premises.

Furthermore, the data processed by the main blocks described in Figure 3 above are combined, the data produced by the blocks "Primary use hourly forecast" and "Secondary use forecast" is processed in the "Hourly capacity forecast" block, whereby a capacity forecast of the entire property is obtained as a function of time, such as by the hour. With this is combined the data on cleaning from the "Cleaning capacity" block and any function overrides for other reasons from the "Manual overrides" block. These may include, for example, more extensive alteration work required in certain premises, permanent bookings, a need for repairs or other similar booking of premises. Eventually, the data presented above is processed together, and in the "Availability & pricing" block is obtained as an end result the availability of the premises or free capacity, as well as guidance for pricing.

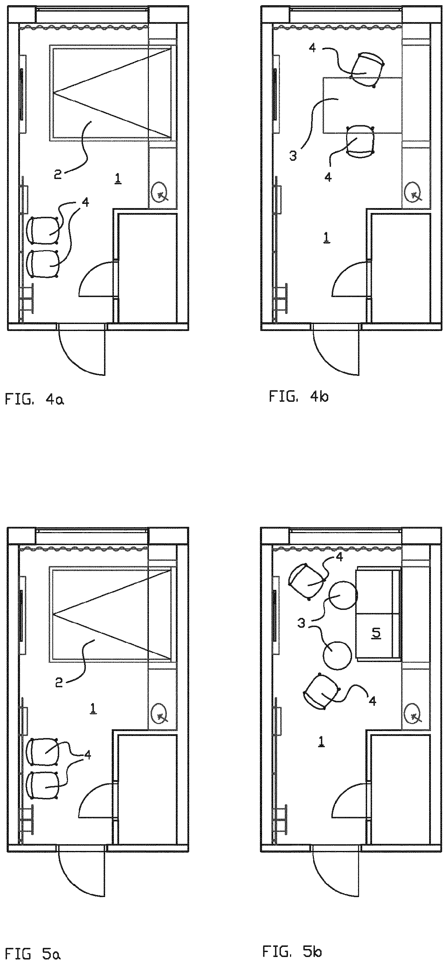

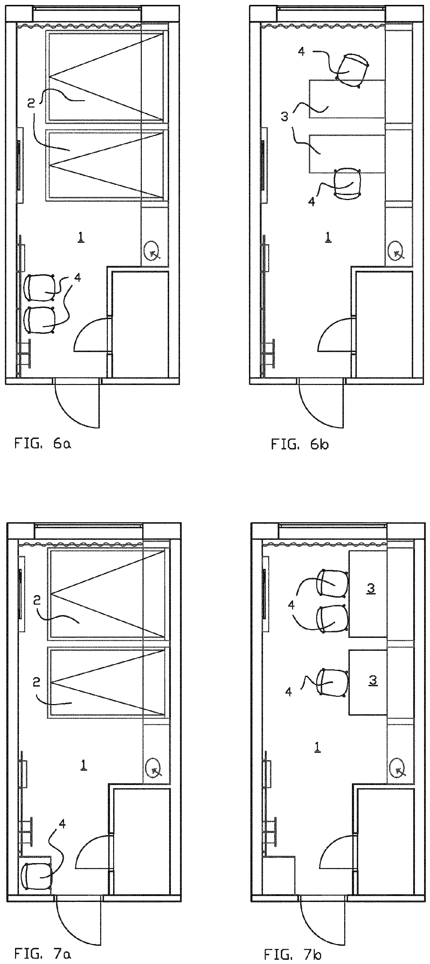

In Figures 4a, 4b, 5a, 5b, 6a, 6b, 7a, 7b, 8a, 8b are shown some potential configurations of the premises of a multi-purpose property, the purpose of use of which can be changed according to need between use as accommodation premises, office work premises or meeting rooms, whereupon each of the said uses comprises the convertible furnishings and/or layout of the premises, whereupon the feature determining the primary use of a piece of furniture can be folded out of the user's reach inside the walls and/or other structures by means of the mechanisms of the piece of furniture and/or layout. Herein, the a-figure in each of the Figures shows a configuration of the primary use and the b-figure shows the version according to the secondary use.

Figure pair 4a-4b shows a basic configuration of premises the purpose of use of which can be changed according to need between use as accommodation premises, office work premises or meeting rooms. For the above-mentioned uses, the premises comprise convertible furnishings and/or layout. In Figure 4a, the feature determining the primary use of the piece of furniture, that is, the bed 2 can be folded out of the reach of the user inside a wall. Figure 4b shows how a table 3 has been arranged in place of the bed 2 in Figure 4a, and how the two chairs 4 in Figure 4a have been placed at the table 3.

Figure pair 5a-5b corresponds to that shown in Figure pair 4a-4b, but the secondary use in Figure 5b is teamwork premises or similar sitting room furnished with a sofa 5, two smaller tables 3 and the same two separate chairs 4. As functional pairs, bed-table or bed-sofa are quite practical pairs, because pieces of furniture of relatively similar size are concerned, and the feature concealing the purpose of use of one of them can be relatively easily arranged in connection with the other structure.

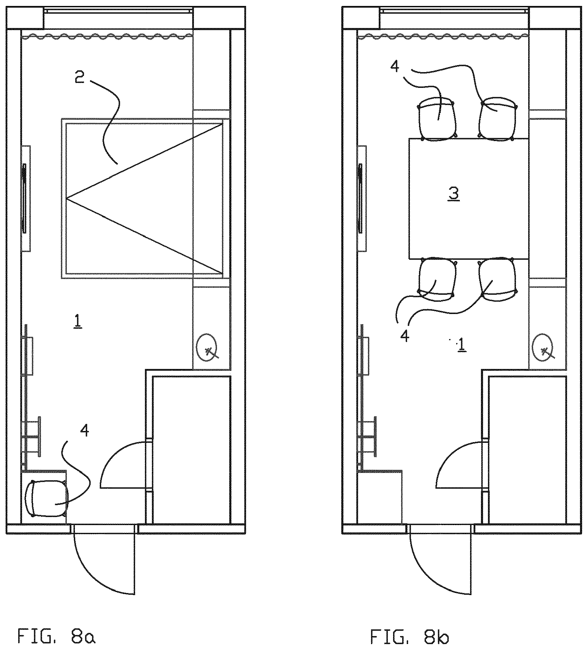

Figure pair 6a-6b is very similar to the previous ones, but the room is slightly more spacious, whereby in the primary use, the room accommodates two beds 2, and similarly, in the secondary use, two desks 3 can be arranged in the room. The chairs 4 are the same in both configurations, placed against a wall or at a table. In Figure pair 7a-7b, two beds are similarly replaced by two desks 3. Figure pair 8a-8b also shows a similar arrangement, where the bed 2 in Figure 8a is replaced by a table in Figure 8b, which is in the Figure illustrated as a slightly larger conference table. In practice, in connection with a double bed can be built a relatively wide and long conference table without particular difficulty of fitting the construction together. In Figure pair 8a-8b, the chairs 4 are shown as being stacked by the door or around the table 3.

It should be noted that in the foregoing are described only some of the most preferred embodiments of the invention. It is thus obvious that the invention is not limited to the embodiments described above but can be applied in many ways within the scope defined in the accompanying claims. It should be noted in particular that although the examples describe overnight stay in a hotel as the primary use, it is not necessarily the only primary use of the corresponding premises to which the method described herein can be applied. The features described in connection with the different embodiments can likewise be used, within the basic idea of the invention, in connection with other embodiments and/or different entities can be combined from the features described if so desired and if technical possibilities for it exist.

### List of reference numerals used:

- PU: primary use
- SU: secondary use
- CC: cleaning capacity
- 1: room (or premises)
- 2: bed
- 3: table
- 4: chair
- 5: sofa

## Claims

1. A method for managing the utilisation capacity of a multi-purpose property, the multi-purpose property comprising numerous bookable premises, the purpose of use of which can be changed according to need between use as accommodation premises, office work premises or meeting rooms, whereupon each of the above-said uses comprises the convertible furnishings and/or layout of the premises, whereupon the feature determining the primary use of a piece of furniture can be folded out of the user's reach inside the walls and/or other structures by means of the mechanisms of the piece of furniture and/or layout, **characterised in that** for managing the utilisation capacity is provided a system by means of which is determined the booking and the booking parameters for each of the premises related to it for each moment of time, the booking parameters including the client, the client type, the booking type according to the allocated use, the starting and ending time of the booking, as well as recorded the actual time of departure, whereupon in the method is calculated a forecast of secondary use period of use which remains between the actual departure times and starting times of the bookings of different clients, which is released for booking for other than primary use.

2. A method according to claim 1, **characterised in that** on the basis of the realised actual departure times, the system calculates for each client a statistical estimated departure time according to client type, whereupon the overall capacity for secondary use is determined on the basis of statistical probability.

3. A method according to claim 1, **characterised in that** the system calculates the forecast of available free capacity until the beginning of each booking, until the booking is confirmed to be in use.

4. A method according to claim 1, **characterised in that** the system comprises an access control function, by means of which the locking of each of the premises is determined, and a physical access control tag, such as a key card, a mobile device NFC tag or the like, by means of the programming of which the bookings and the secondary use period between bookings are separated from one another.

5. A method according to claim 1 or any of the preceding claims, **characterised in that** the method is controlled by a user interface adaptable to a mobile device, whereupon the client can independently make a booking concerning the premises or their uses, or change a booking.

6. A method according to claim 1, **characterised in that** a client of the multi-purpose property may be an organisational user managing the bookings of several premises and allocating them to several separate users in the said organisation.

7. A method according to claim 6, **characterised in that** the system includes a feature by means of which future bookings of premises are forecast on the basis of an organisational user's earlier or preliminary indicated needs.

8. A method according to claim 1 or any of the preceding claims, **characterised in that** the system comprises an incentive relating to the management of the bookings, which motivates the user to choose a course of action which allows selling the secondary use period or to choose a starting time for the booking or ending time for the booking based on the capacity calculated by the system and deviating from the user's primary wish.

9. A method according to claim 8, **characterised in that** when the system detects a change in demand in the bookings of the premises, the system can change the incentive in order to make possible a booking for premises corresponding to the demand.

10. A method according to claim 8 or 9, **characterised in that** the incentive may guide the client to choose a later starting time for the booking or an earlier ending time for the booking.

11. A method according to claim 1 or 8, **characterised in that** the system comprises a referral programme as an incentive, by means of which registered users with payment transactions can also recommend the services of the property in question or of the same operator to their own contacts and be compensated when a new user is obtained for whom payment transactions are created.

12. A method according to claim 1 or any of the preceding claims, **characterised in that** the system comprises a feature which directs the physical change in the purpose of use of the premises and cleaning to be carried out in the time window associated with the change of client.

13. A computer program which, when running on a computer, is configured to implement one of the methods according to any of the preceding claims.

14. A user interface for controlling the method according to any of the preceding claims.

15. A user interface adaptable to a mobile device for controlling the method according to any of the preceding claims.

16. A convertible piece of furniture, wherein the feature determining the primary use of the piece of furniture can be folded out of the user's reach inside walls and/or other structures by means of the mechanism of the piece of furniture, **characterised in that** the piece of furniture comprises an electrically controlled locking mechanism with at least one sensor and/or switch for identifying the primary position of use and the secondary position of use, as well as a locking device or locking devices for opening/locking the said operating positions, whereupon the piece of furniture is programmatically controllable by means of the method according to claim 1.

17. A piece of furniture according to claim 16, **characterised in that** the piece of furniture is a bed (2), table (3), chair (4), sofa (5), room divider or a combination of any of the foregoing.
